# FASCICULE DE BREVET EUROPEEN

(11) **EP 4 493 451 B1**
(45) Date de publication et mention de la délivrance du brevet: **06.05.2026**
(21) Numéro de dépôt: 23711442.6
(22) Date de dépôt: 13.03.2023
(51) Int. Cl.: B62J 33/00, B62J 9/23, B62J 9/24, B62J 9/27, B62J 7/08, A41D 13/005, B60H 1/00, B60H 1/22, A41D 13/018, F25B 21/04

(54) **MODULE DE RÉGULATION THERMIQUE POUR UN SYSTÈME DE RÉGULATION THERMIQUE DE TOUT OU PARTIE DU CORPS D'UN INDIVIDU, SYSTÈME ET MOTOCYCLE COMPRENANT UN TEL MODULE**
WÄRMESTEUERMODUL FÜR EIN SYSTEM ZUR WÄRMEREGELUNG DES GESAMTEN ODER EINES TEILS EINES PERSONENKÖRPERS UND SYSTEM UND MOTORRAD MIT SOLCH EINEM MODUL
THERMAL CONTROL MODULE FOR A SYSTEM FOR THERMALLY CONTROLLING ALL OR A PORTION OF A PERSON'S BODY, AND SYSTEM AND MOTORCYCLE COMPRISING SUCH A MODULE

(30) Priorité: 15.03.2022 FR 2202274
(43) Date de publication de la demande: 22.01.2025
(73) Titulaire: SD & BA, 31400 Toulouse (FR)
(72) Inventeur: STAS, David, 31400 TOULOUSE (FR)
(74) Mandataire: Santarelli
(86) Numéro de dépôt international: PCT/EP2023/056383
(87) Numéro de publication internationale: WO 2023/174889

(56) Documents cités:
- WO-A1-99/66274
- US-A1- 2007 084 496
- US-A1- 2009 308 082
- US-A1- 2015 075 185
- US-A1- 2016 206 018
- US-A1- 2020 329 788

## Description

### DOMAINE TECHNIQUE DE L'INVENTION

Le domaine de l'invention est celui de la régulation thermique de tout ou partie du corps d'un individu.

Plus précisément, l'invention concerne un module de régulation thermique pour un système de régulation thermique de tout ou partie du corps d'un individu, notamment d'un motocycliste. Le module est adapté pour coopérer avec un vêtement de régulation thermique. L'invention concerne également un système comprenant un tel module, couplé à un vêtement de régulation thermique. L'invention concerne de plus un motocycle équipé d'un tel système.

L'invention trouve notamment des applications dans la régulation thermique de tout ou partie du corps d'un individu. En particulier, le tronc et/ou les membres inférieurs du corps de l'individu sont régulés thermiquement. La régulation thermique peut être correspondre à un apport de chaleur au corps de l'individu, c'est-à-dire qu'elle a but de le réchauffer, tout comme elle peut correspondre à une évacuation de chaleur du corps de l'individu, c'est-à-dire qu'elle a but de le rafraichir. Le système de régulation thermique selon l'invention est donc réversible.

### ÉTAT DE LA TECHNIQUE

Il est connu de l'art antérieur des techniques de régulation thermique, notamment du corps d'un individu. Par exemple, certaines techniques impliquent des vêtements thermorégulant, tels des vestes ou des pantalons, dans lesquels un fluide caloporteur peut circuler. Le fluide, qui est généralement un liquide, est refroidi ou réchauffé dans un module externe au vêtement.

Un tel module nécessite une source d'énergie, en particulier électrique, afin d'effectuer un transfert d'énergie et évacuer, ou apporter, les calories depuis le fluide caloporteur vers l'environnement, ou depuis l'environnement vers le fluide caloporteur.

Une technique connue consiste à utiliser des dispositifs, ou modules, thermoélectriques à effet Peltier. Un dispositif Peltier est une structure semiconductrice composée d'une succession de jonctions P-N (c'est-à-dire des semiconducteurs dopés positivement, respectivement négativement). Lorsqu'elle est traversée par un courant électrique continu, une telle structure possède la particularité de produire de la chaleur lorsque le courant passe d'un semiconducteur P à un semiconducteur N (c'est-à-dire que la jonction se comporte comme une source de chaleur), et de capter la chaleur lorsque le courant passe d'un semiconducteur N à un semiconducteur P (c'est-à-dire que la jonction se comporte comme un puit de chaleur). Par une disposition regroupée des jonctions P vers N et N vers P, il est possible d'obtenir un dispositif présentant deux faces, dont l'une peut se réchauffer, et l'autre se refroidir, lorsque le dispositif est traversé par un courant électrique. Par une inversion du sens du courant électrique continu, le dispositif est rendu réversible.

Dans le cadre d'un module de système de régulation thermique par transport de chaleur dans un fluide caloporteur, l'une des faces du dispositif Peltier est mis en liaison thermique avec le fluide caloporteur, afin de transporter la chaleur jusqu'à l'individu.

Un circuit hydraulique adapté pour un tel transport fait également partie d'un tel système de régulation thermique.

La source d'énergie électrique alimentant le dispositif Peltier est généralement un accumulateur électrique, également souvent appelé batterie, en particulier lorsque le système est nomade. On connaît par exemple des systèmes nomades pour la régulation thermique du corps d'un motocycliste. La source d'énergie électrique est alors généralement la batterie du motocycle.

On connaît par exemple le document US 2009/308082 A1 qui décrit une technique pour chauffer le corps d'un motocycliste au moyen des étapes suivantes : transfert de la chaleur de l'atmosphère à un élément thermoconducteur monté sur une moto par l'effet Peltier ; et circulation d'un liquide de travail en cycle fermé depuis l'élément thermoconducteur, à travers un vêtement porté par le motocycliste via un raccord d'entrée et un raccord de sortie, puis retour à l'élément thermoconducteur. Dans une autre configuration, le fonctionnement est inverse pour refroidir le corps du motocycliste.

Bien que les système connus soient satisfaisant en termes de performances de régulation thermique, leur intégration sur des véhicules tels des motocycles reste peu satisfaisante.

En effet, premièrement, les techniques connues nécessitent une adaptation à chaque type ou modèle de motocycle, en fonction de la place disponible, et des contraintes techniques dictées par chaque constructeur de motocycle.

Ainsi, bien qu'une solution satisfaisante d'intégration puisse être trouvée pour chaque type ou modèle de motocycle particulier, cette approche implique des coûts élevés de conception et de fabrication, des difficultés logistiques, de maintenance, et de service après-vente, et ne permet pas de satisfaire tous les utilisateurs de motocycles.

Il existe donc le besoin d'un système de régulation thermique unique qui s'adapte à un grand nombre de motocycles.

Deuxièmement, les techniques connues ne sont pas facilement amovibles ou remplaçables. En effet, certaines solutions proposées impliquent le remplacement de pièces d'origine du véhicule par des pièces modifiées comprenant les composants du système de régulation thermique.

Une telle solution présente des inconvénients en termes d'homologation des pièces de remplacement, et elle présente également des inconvénients pour l'utilisateur qui doit conserver la pièce d'origine pour l'installer en lieu et place du système de régulation lorsqu'il souhaite le démonter, par exemple lorsqu'il ne souhaite plus l'utiliser temporairement, ou bien lorsqu'il souhaite vendre son véhicule.

Il existe donc le besoin d'un système de régulation thermique qui puisse être intégré sur un motocycle sans nécessiter de modification du motocycle, ou le remplacement de l'une de ses pièces.

Troisièmement, les techniques connues ne sont pas pleinement satisfaisantes dans leur rapport encombrement/évacuation thermique. En effet, les systèmes actuels sont soit relativement encombrants, afin de présenter des surfaces de dissipation thermique et des canaux de circulation thermique suffisants. Lorsqu'il est entrepris de réduire l'encombrement, les systèmes actuels ne sont plus aussi performants en termes d'évacuation thermique, notamment dans des plages de température extrêmes (c'est-à-dire un refroidissement important dans un environnement chaud, comme en été, ou inversement un réchauffement important dans un environnement froid, comme en hiver).

Il existe donc le besoin d'un système de régulation thermique qui soit à la fois performant en termes de dissipation thermique et peu encombrant.

Aucun des systèmes actuels ne permet de répondre simultanément à tous les besoins requis, à savoir de proposer une technique système de régulation thermique qui s'adapte à un grand nombre de motocycles, sans nécessiter de modification du motocycle, et qui soit peu encombrant mais performant en termes de dissipation thermique.

### EXPOSÉ DE L'INVENTION

La présente invention vise à remédier à tout ou partie des inconvénients de l'état de la technique cités ci-dessus.

À cet effet, l'invention vise, un module de régulation thermique pour un système de régulation thermique de tout ou partie du corps d'un individu, notamment d'un motocycliste, comportant un circuit fluidique ouvert comprenant :
- un réservoir de compensation adapté pour contenir un volume de fluide caloporteur,
- une pompe adaptée pour faire circuler ledit fluide caloporteur dans ledit circuit fluidique ouvert,
- un élément d'échange thermique adapté pour la circulation dudit fluide caloporteur, ledit élément d'échange thermique étant en liaison thermique avec une première face d'échange de chaleur d'un dispositif thermoélectrique à effet Peltier adapté pour être relié électriquement à une source de courant continu, le dispositif thermoélectrique présentant une seconde face d'échange de chaleur avec l'environnement,
ledit réservoir, ladite pompe et ledit élément d'échange thermique étant reliés fluidiquement et étant disposés dans le corps d'un boitier, et ledit circuit fluidique ouvert présentant une ouverture d'entrée et une ouverture de sortie débouchant respectivement dudit boitier, les ouvertures d'entrée et de sortie étant adaptées pour être raccordés, directement ou indirectement via un conduit souple, respectivement à une extrémité d'un conduit d'un vêtement de régulation thermique de sorte à former un circuit fluidique fermé,
- ledit boitier comprend une face inférieure présentant une pluralité de points d'ancrage sur un élément de structure d'un motocycle, notamment sur un support de fixation d'un élément de bagage pour motocycle de type « top-case » ou sacoche, et une face supérieure présentant une pluralité de points de fixation d'un élément de bagage pour motocycle de type « top-case » ou sacoche, lesdites face inférieure et face supérieure étant distantes d'une hauteur h,
- ledit boitier comporte un emplacement de fixation de l'élément d'échange thermique présentant un moyen de mise à distance de l'élément d'échange thermique des parois du boitier,
- ladite face d'échange de chaleur avec l'environnement est en liaison thermique avec au moins un radiateur de type « à caloduc » s'étendant dans une direction orthogonale à la hauteur h.

Grâce à ces dispositions, la hauteur h est minimisée et l'échange de chaleur avec l'environnement est maximisé.

En effet, le boitier tel que proposé par l'invention autorise la fixation en « sandwich » ou en tenaille entre une structure de motocycle, et un élément de bagage pour motocycle, de manière totalement novatrice par rapport à l'art antérieur connu.

Le boitier est conçu, sur ses faces supérieures et inférieures, de manière à pouvoir tirer parti d'un système classique de fixation d'un élément de bagage sur un motocycle. Il en résulte un système particulièrement flexible, qui s'intègre simplement et sans modifications importantes sur un motocycle.

La hauteur h du boitier doit être la plus faible possible, pour que le module selon l'invention soit le moins encombrant possible, de façon à ne pas entraver l'utilisation de l'élément de bagage, et à préserver l'aspect esthétique du motocycle.

La disposition de l'élément d'échange thermique à distance des parois du boitier permet d'améliorer les échanges thermiques dans un boitier de taille réduite. La liaison du dispositif thermoélectrique avec un radiateur à caloduc orienté perpendiculairement permet de maximiser les échanges thermiques dans un espace réduit, par le choix particulier de l'orientation et du type de radiateur.

Ces dispositions permettent d'obtenir une régulation thermique très efficace et performante même dans des plages de températures extrêmes, tout en œuvrant à la réduction de la hauteur du boitier. Un tel résultat n'aurait pu être attendu au vu des solutions proposées dans l'art antérieur, pour lesquelles la réduction de l'encombrement d'un module de régulation thermique signifie toujours une baisse de performance de régulation thermique.

Selon un mode de réalisation préférentiel, les points d'ancrage sont présentés sur une platine inférieure fixée de façon amovible au corps du boitier.

De cette manière, le module est encore davantage adaptable, de manière très simple, simplement à des systèmes d'ancrage spécifiques ou propriétaires de fabricants. Il suffit de changer de platine inférieure pour s'adapter à un nouveau système d'ancrage.

Selon un mode de réalisation préférentiel, les points de fixation sont présentés sur une platine supérieure fixée de façon amovible au corps du boitier.

De cette manière, le module est encore davantage adaptable, de manière très simple, à des systèmes de fixation spécifiques ou propriétaires de fabricants. Il suffit de changer de platine supérieure pour s'adapter à un nouvel élément de bagage. Généralement, les platines supérieures et inférieures correspondent à un même système d'accrochage d'élément de bagage, et sont conçues par paires correspondantes.

Selon un mode de réalisation préférentiel, les points d'ancrage sont disposés selon un schéma d'ancrage reproduit à au moins deux positions distinctes, de façon à permettre la fixation dans au moins deux positions de fixation du boitier audit élément de structure.

De cette manière, il est possible de de régler la position du module, et indirectement de l'élément de bagage, en choisissant l'un ou l'autre des schémas d'ancrage. Généralement, un deuxième schéma est obtenu par translation du premier schéma selon une direction longitudinale du module, correspondant à la direction d'avancement du motocycle lorsque le module est monté sur le motocycle.

Selon un mode de réalisation préférentiel, ledit moyen de mise à distance est formé par une pluralité de plots moulés sur une paroi inférieure du corps du boitier, les plots étant adaptés pour supporter ledit élément d'échange thermique.

De cette manière, on fournit dans une même pièce le moyen de mise à distance et une partie du boitier, ce qui réduit les étapes de fabrication et de montage. De plus il n'y a aucun risque de déplacement des moyens de mise à distance. Les plots sont avantageusement particulièrement plats par rapport à la hauteur de l'élément d'échange thermique, et présente préférentiellement une hauteur inférieure à 1 millimètre. Dans ce mode de réalisation, il est particulièrement avantageux que le corps du boitier soit en plastique moulé.

Selon un mode de réalisation alternatif, ledit moyen de mise à distance est une couche de matière isolante disposée contre une paroi inférieure du corps du boitier.

Ce mode de réalisation présente l'avantage d'une fabrication plus simple du corps du boitier, et de pouvoir sélectionner une matière isolante avec des propriétés particulières. La couche de matière isolante peut par exemple être une mousse isolante.

Selon un mode de réalisation préférentiel, l'emplacement de fixation de l'élément d'échange thermique est sensiblement centré sur une paroi inférieure du corps du boitier, et dans lequel ledit radiateur s'étend au moins de part et d'autre dudit emplacement, sensiblement jusqu'aux parois latérales dudit corps de boitier
Par ces dispositions, l'élément d'échange thermique est disposé de manière centrale. Le dispositif thermoélectrique est disposé sur l'élément d'échange thermique, sur lequel est disposé le radiateur. Le dispositif thermoélectrique se trouve ainsi également au centre de la paroi inférieure du boitier, et le radiateur peut s'étendre de part et d'autre de façon à optimiser son fonctionnement. Le radiateur s'étend préférentiellement également au-dessus du dispositif thermoélectrique, avec lequel il est en liaison thermique, et donc au-dessus dudit emplacement. En effet, les extrémités des caloducs se trouvent à une distance maximale du dispositif thermoélectrique, tout en maximisant la surface d'échange thermique.

Selon un mode de réalisation préférentiel, ledit réservoir est directement intégré dans la paroi inférieure dudit corps de boitier.

Ainsi, il est possible de faire l'économie d'une paroi de réservoir, et de réduire encore significativement la hauteur h. Il est également possible de mouler directement tout ou partie du réservoir directement avec le corps de boitier, réduisant ainsi encore les étapes de fabrication et de montage.

Selon un mode de réalisation préférentiel, le corps de boitier comprend une zone aimantée sur l'une de ses parois latérales.

De cette manière, il est possible de maintenir en position, à des fins de rangement, une extrémité de conduit souple dépassant du module. L'extrémité du conduit est alors également aimantée, ou métallique.

Selon un mode de réalisation préférentiel, le boitier comprend une trappe sur l'une de ses parois latérales, accessible depuis l'extérieur du boitier, ouvrant sur une cavité adaptée pour contenir un conduit souple de raccordement à un vêtement de régulation thermique dans une position de rangement.

Ainsi, le rangement de conduit souple de raccordement du module au vêtement est amélioré. Le risque de détérioration du conduit est réduit, et l'esthétique du module est préservée.

Selon un mode de réalisation préférentiel, le boitier comprend un enrouleur automatique, préférentiellement à ressort, d'un conduit souple de raccordement à un vêtement de régulation thermique, et un moyen de blocage dudit conduit souple dans une position déroulée variable.

Grâce à ces dispositions, le rangement du conduit souple est encore facilité, l'enrouleur permettant de ranger automatiquement le conduit lorsqu'il est déconnecté du vêtement. De plus une longueur adaptée de conduit peut être sélectionnée grâce au moyen de blocage, permettant d'éviter que le conduit ne gêne l'utilisateur par une longueur inappropriée.

Selon un mode de réalisation préférentiel, le module comprend également une unité de commande reliée audit dispositif thermoélectrique et à ladite pompe, et configurée au moins pour allumer et éteindre ledit module, et réguler une température de service ou réguler une puissance consommée par le dispositif thermoélectrique.

Ainsi, l'utilisateur peut choisir différent niveau de fonctionnement du module, adapté aux circonstances.

Selon un mode de réalisation préférentiel, l'unité de commande comprend un moyen de communication sans fil avec une télécommande dudit module, ladite télécommande étant configurée au moins pour allumer et éteindre ledit module, et régler une température de consigne du corps de l'individu ou réguler un niveau de puissance consommée par le dispositif thermoélectrique.

De cette manière, l'utilisateur peut confortablement réguler le niveau de fonctionnement pendant le pilotage du motocycle notamment, par exemple lorsque la télécommande est fixée au volant du motocycle.

Selon un mode de réalisation préférentiel, l'unité de commande est configurée pour
- détecter un bruit de fond du signal électronique provenant de la source de courant continu, dans lequel la source de courant continu est un accumulateur externe audit module, notamment un accumulateur de motocycle ;
et lorsqu'aucun bruit de fond est détecté ;
- éteindre le module.

Ainsi, il peut être évité que le module ne soit mis en marche alors que le moteur du motocycle, qui alimente le module via son accumulateur, n'est pas en marche. Cela permet d'éviter de vider l'accumulateur du motocycle, ce qui empêcherait l'utilisateur de démarrer à nouveau son véhicule.

L'invention concerne également un système de régulation thermique de tout ou partie du corps d'un individu, notamment d'un motocycliste, comprenant un module de régulation thermique selon l'invention, et un vêtement de régulation thermique, les ouvertures d'entrée et de sortie dudit module étant raccordés, directement ou indirectement via un conduit souple, respectivement à une extrémité d'un conduit du vêtement de régulation thermique.

Selon un mode de réalisation préférentiel, le vêtement de régulation thermique comporte une double peau fermée par couture en périphérie du vêtement, et dans lequel le conduit du vêtement de régulation thermique est collé sur la peau interne de la double peau, de façon à se trouver à l'intérieur de la double peau.

Ainsi, un rendu très esthétique peut être obtenu, puisque le conduit du vêtement de régulation n'est plus visible directement de l'extérieur du vêtement. De plus, ce mode de fabrication est également beaucoup plus simple, car il suffit de refermer la double peau et non plus coller les deux peaux l'une à l'autre, tel que cela était fait dans l'art antérieur.

Selon un mode de réalisation préférentiel, le vêtement de régulation thermique est également un vêtement de sécurité et comporte un coussin gonflable de type « airbag », le conduit du vêtement de régulation thermique étant soudé, préférentiellement par soudage haute fréquence, sur une face intérieure dudit coussin gonflable.

Ainsi, une fonction particulièrement avantageuse de sécurité de l'utilisateur est obtenue. Contrairement à ce que laissait présager l'art antérieur, il apparaît que la coexistence d'une fonction de régulation thermique et de sécurité est possible, sans entraver le fonctionnement de l'une ou l'autre des fonctions, et sans augmenter l'encombrement total du vêtement.

L'invention a également pour objet un ensemble comprenant un motocycle et un système de régulation thermique de tout ou partie du corps d'un individu, notamment d'un motocycliste, selon l'invention, et dans lequel ledit module est relié électriquement à un accumulateur du motocycle, et relié mécaniquement à un élément de structure du motocycle, en particulier à un support de fixation d'un élément de bagage pour motocycle de type « top-case » ou sacoche, via ladite pluralité de points d'ancrage sur un élément de structure d'un motocycle.

Selon un mode de réalisation préférentiel, l'ensemble comprend en outre un élément de bagage pour motocycle de type « top-case » ou sacoche fixé sur ledit module via ladite pluralité de points de fixation d'un élément de bagage pour motocycle de type « top-case » ou sacoche, de sorte que ledit boitier soit pris « en sandwich » entre ledit élément de structure du motocycle et ledit élément de bagage pour motocycle.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la [Fig 1] est une représentation schématique du fonctionnement d'un système de régulation thermique,
- la [Fig 2] est une représentation schématique en perspective du module,
- la [Fig 3] est une représentation schématique vue de côté du module,
- la [Fig 4] est une représentation schématique selon deux vues d'un motocycle équipé d'un module,
- la [Fig 5] est une représentation schématique d'un motocycle équipé d'un module, sur lequel est fixé un élément de bagage,
- la [Fig 6] est une vue de dessous du module, sur laquelle apparaît la face inférieure du boitier,
- la [Fig 7] est une vue de dessus du module, sur laquelle apparaît la face supérieure du boitier,
- la [Fig 8] est une représentation schématique en perspective partielle du module ouvert,
- la [Fig 9] est une vue de détail en coupe du réservoir du module selon un mode particulier de réalisation,
- la [Fig 10] est une représentation schématique en perspective du fond plat du module,
- la [Fig 11] est une représentation schématique en perspective partielle du module, sur laquelle apparait notamment un radiateur à caloduc.

### DESCRIPTION DÉTAILLÉE DE L'INVENTION

La présente description est donnée à titre non limitatif.

On note, dès à présent, que les figures ne sont pas à l'échelle.

### Exemple d'un mode de réalisation particulier

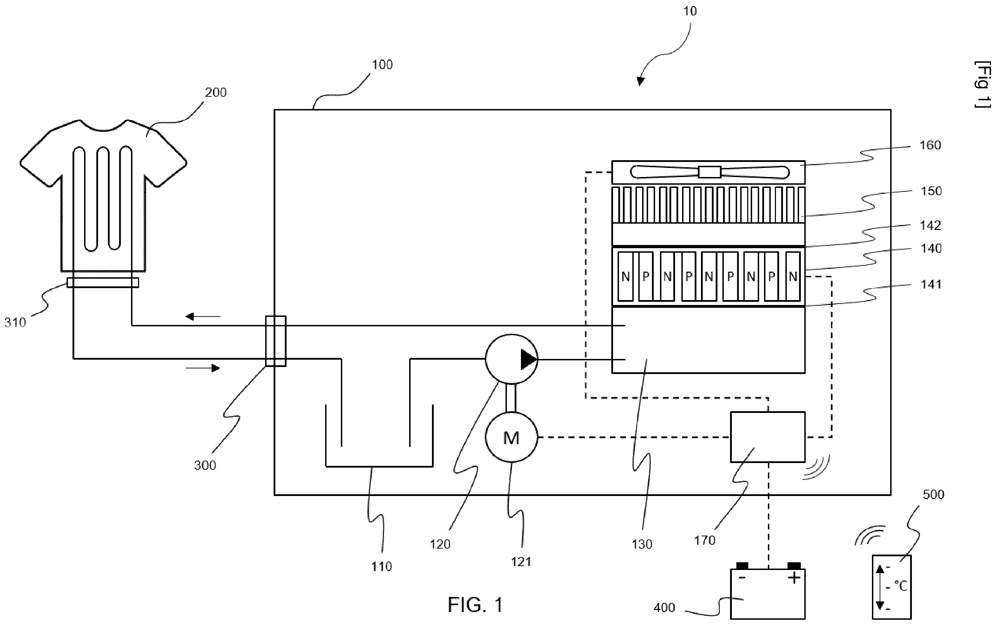

La figure 1 représente schématiquement le fonctionnement et la structure d'un système 10 de régulation thermique.

Un module 100 de régulation thermique comprend un circuit fluidique ouvert. Le fluide circulant dans le circuit est un fluide caloporteur. En particulier, le fluide est un liquide, tel de l'eau par exemple.

Le circuit fluidique ouvert débute, dans le sens de circulation du fluide, par une ouverture d'entrée d'un conduit, débouchant dans un réservoir 110 disposé à l'intérieur du module 100. Le réservoir 110 est un réservoir de compensation adapté pour contenir un volume de fluide caloporteur. Le réservoir 110 sert à compenser des différences de volume du fluide caloporteur, pouvant se manifester lors de l'utilisation du système de régulation thermique, principalement en raison de variations de température.

Un conduit de sortie du réservoir 110 relie ce dernier à une pompe 120. La pompe 120 est adaptée pour faire circuler le fluide caloporteur dans le circuit fluidique ouvert, mais également dans le circuit fluidique fermé tel qu'il sera décrit par la suite. La pompe 120 est préférentiellement animée par un moteur 121 électrique.

Selon une variante préférentielle, la pompe 120 est directement disposée dans l'enceinte du réservoir 110. Un agencement particulièrement compact peut ainsi être obtenu. De plus, les risques de fuites sont réduits par la réduction du nombre de conduits et de connecteurs.

Un conduit de sortie de la pompe 120 relie cette dernière à une ouverture d'entrée d'un élément d'échange thermique 130. L'élément d'échange thermique 130 est un compartiment dans lequel le fluide caloporteur peut circuler. L'élément d'échange thermique 130 est en particulier sensiblement parallélépipédique rectangle, de faible hauteur. Il est avantageux que l'élément d'échange thermique 130 présente au moins une face de dimension significativement supérieure aux dimensions des autres faces, notamment les faces latérales, afin de présenter la plus grande surface d'échange thermique possible.

Un tel élément d'échange thermique 130 est parfois appelé « Waterblock » en terminologie anglaise, dans le cas d'un élément pouvant contenir de l'eau comme fluide caloporteur.

Un conduit de sortie de l'élément d'échange thermique 130 s'étend jusqu'à déboucher du module 100, et forme à cet endroit une ouverture de sortie du circuit fluidique ouvert.

Le circuit fluidique ouvert présente ainsi une ouverture d'entrée et une ouverture de sortie, qui peuvent être raccordées à une ouverture d'entrée et une ouverture de sortie d'un vêtement 200 de régulation thermique, ou vêtement thermorégulant. En particulier, l'ouverture et la sortie du circuit fluidique ouvert peuvent dépasser légèrement du module 100, et prendre la forme de tubes souples au bout desquels des raccords peuvent être disposés, tel que cela est décrit par la suite.

Le vêtement 200 est parcouru par au moins un conduit de circulation du fluide caloporteur. Le conduit présente une ouverture d'entrée et une ouverture de sortie, qui peuvent être raccordés respectivement à l'ouverture de sortie et l'ouverture d'entrée du module 100. Le circuit fluidique ouvert du module 100 et le conduit du vêtement 200, qui représente un autre circuit fluidique ouvert, forment alors un circuit fluidique fermé. Le fluide caloporteur peut circuler dans le circuit fluidique fermé, et réchauffer ou rafraichir le porteur du vêtement 200.

Le raccordement du module 100 au vêtement 200 est préférentiellement réalisé au moyen d'un raccord 300. Le raccord 300 est réalisé de sorte à former une valve s'ouvrant lorsque le raccordement entre une ouverture d'entrée et une ouverture de sortie est effectuée, et qui reste fermée lorsque le module 100 est le vêtement 200 sont séparés. Ainsi, le fluide caloporteur contenu dans le module 100 et le vêtement 200 ne peut s'écouler lorsque les circuits fluidiques sont ouverts. De préférence, le raccord 300 est également réalisé de sorte à découpler le module 100 du vêtement 200 lorsqu'une tension supérieure à un seuil prédéfini est exercée sur le raccord, par exemple en cas de chute ou d'oubli de découplage. Le raccord 300 peut être réalisé de manière à regrouper l'entrée et la sortie fluidique du module 100, ou bien se présenter sous la forme d'un raccord d'entrée et d'un raccord de sortie distinct.

Alternativement ou en complément du raccord 300, il est également possible de prévoir un raccord 310 à proximité du vêtement 200. Le raccord 310 peut notamment être similaire au raccord 300 dans sa conception. Lorsque deux raccords 300 et 310 sont utilisés, le raccordement entre le module 100 et le vêtement 200 est effectué indirectement au moyen d'un conduit, par exemple souple, de raccordement ou liaison.

Le module 100 comporte par ailleurs un dispositif thermoélectrique 140 à effet Peltier, ou dispositif Peltier 140. Le dispositif thermoélectrique 140 est adapté pour être relié électriquement à une source de courant continu, pour son alimentation électrique.

Tel que cela a été décrit dans la présentation de l'état de la technique, un dispositif Peltier est une structure semiconductrice composée d'une succession de jonctions P-N, qui sont disposées de manière à ce que le dispositif présente une face pouvant se réchauffer, et une autre face pouvant se refroidir, lorsque le dispositif est traversé par un courant électrique dans un premier sens, et inversement, lorsque le dispositif est traversé par un courant électrique dans un second sens.

Le dispositif thermoélectrique 140 présente une première face 141 d'échange de chaleur. La première face 141 est en liaison thermique avec l'élément d'échange thermique 130. La liaison thermique peut être réalisée par simple contact, éventuellement complété par l'application d'une pâte thermique permettant d'améliorer la conduction thermique.

Le dispositif thermoélectrique 140 présente une seconde face 142 d'échange de chaleur. La seconde face 142 est une face d'échange de chaleur avec l'environnement. En particulier, la seconde face 142 a pour rôle la dissipation de la chaleur, lorsque le module 100 est utilisé pour refroidir.

Afin d'améliorer la dissipation de chaleur, la seconde face 142 est en liaison thermique avec un radiateur 150. Ici aussi, l'application d'une pâte thermique peut être envisagée.

Afin d'améliorer l'évacuation de la chaleur, un ou plusieurs ventilateurs 160 peuvent être prévus à proximité du radiateur 150, de façon à transporter la chaleur par convection hors du module 100.

L'alimentation du module 100 est préférentiellement assurée par un ou plusieurs accumulateurs électriques externes. Par exemple, un ou plusieurs accumulateurs externes peuvent être compris dans une batterie 400 de motocycle. Il est toutefois possible d'envisager l'utilisation d'autres types d'accumulateurs externes, notamment d'un accumulateur dédié. Un tel accumulateur dédié peut cependant également être interne au module 100.

Avantageusement, la batterie 400 assure également l'alimentation électrique d'autres composants du module 100, tels le moteur 121 de la pompe 120, un ou plusieurs ventilateurs 160, ou encore d'une unité de commande 170 du module 100.

L'unité de commande 170 est reliée électriquement au moteur 121 et au dispositif thermoélectrique 140, ainsi qu'aux ventilateurs 160 lorsque le module 100 en est équipé. En particulier, elle est également reliée électriquement à la batterie 400, de façon à distribuer l'énergie aux différents composants du module 100. Sur la figure 1, les liaisons électriques sont représentées en pointillés de façon schématique.

L'unité de commande comprend notamment un calculateur ou processeur

L'unité de commande 170 est configurée au moins pour allumer et éteindre le module 100, et réguler une température de service. Pour réguler la température de consigne, l'unité de commande 170 peut comparer une température de consigne du corps de l'individu avec une température mesurée. La température mesurée peut être mesurée soit sur le circuit fluidique du module 100, soit au niveau vêtement 200. En fonction du résultat de la comparaison, la température de service est augmentée ou abaissée.

L'unité de commande 170 peut également être configurée au moins pour allumer et éteindre le module 100, et réguler un niveau de puissance électrique du dispositif thermoélectrique 140. Plus précisément, il est prévu que plusieurs niveaux de chauffage et plusieurs niveaux de refroidissement soit sélectionnables, par exemple via une interface homme-machine telle une télécommande. Chaque niveau correspond à une valeur de puissance consommée par le dispositif thermoélectrique 140. Les correspondances entre ces niveaux et les valeurs de puissance peuvent être indexées dans une table stockée dans une mémoire de stockage non volatile de l'unité de commande 170.

L'unité de commande 170 peut en outre être équipée d'un moyen de communication sans fil avec une télécommande 500 du module 100. La télécommande 500 est configurée au moins pour allumer et éteindre le module 100, et régler une température de consigne du corps de l'individu, ou réguler un niveau de puissance consommée par le dispositif thermoélectrique 140. La télécommande 500 peut être munie de moyens de fixation au guidon d'un motocycle, par exemple via une liaison magnétique avec un support fixé sur le guidon. De préférence, la liaison de données sans fil établie entre la télécommande 500 et le module 100 est établie selon un protocole Bluetooth (marque déposée) ou par radiofréquences. Il est également envisageable d'établir une connexion filaire de données entre l'unité de commande 170 et la télécommande 500, qui peut alors être déportée à un emplacement fixe tel le guidon du motocycle.

Le module 100 comprend un boitier 180 comprenant un corps dans lequel sont disposés les composants précités du module 100. Le corps du boitier 180 forme une cavité fermée contenant les composants essentiels du module 100, tels le réservoir 110, la pompe 120 et l'élément d'échange thermique 130 notamment.

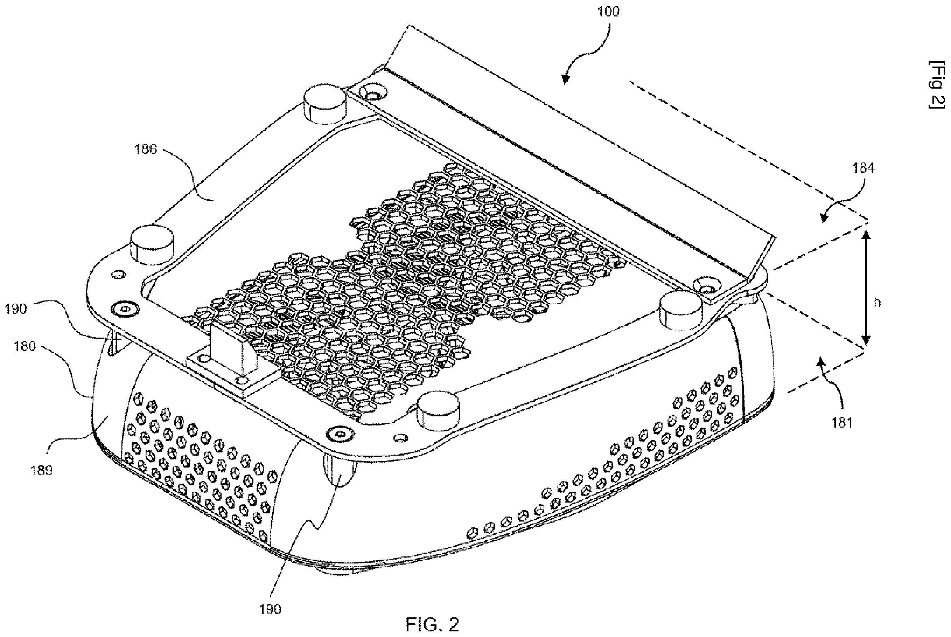

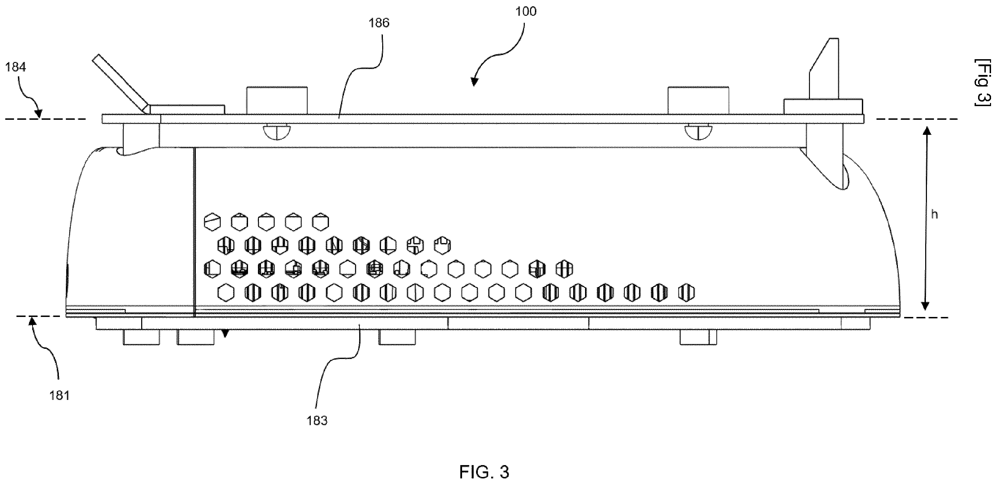

Les figures 2 et 3 représentent l'extérieur du module 100, en perspective et vu de côté. Le module 100 selon l'invention présente la particularité d'être intégrable sur un élément de structure d'un motocycle, et notamment sur un support de fixation d'un élément de bagage pour motocycle de type « top-case » ou sacoche. De plus, le module 100 selon l'invention présente également la particularité de permettre la fixation d'un élément de bagage pour motocycle de type « top-case » ou sacoche sur le boitier 180. De cette manière, le module 100 est intégré sur un motocycle sans nécessiter de modification du motocycle, en utilisant des points d'ancrage du motocycle existants par ailleurs, tout en permettant de continuer à fixer des éléments de bagage sur le motocycle.

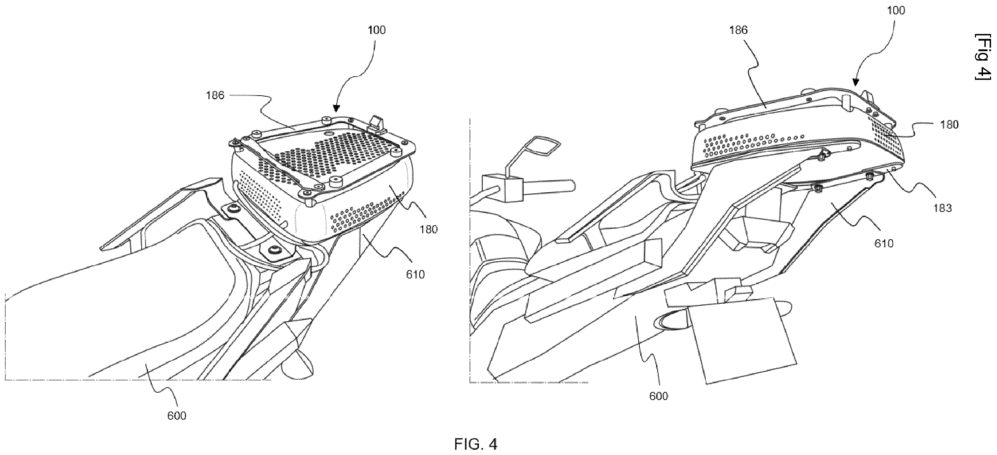

La figure 4 représente un motocycle 600 équipé d'un module 100 selon l'invention, fixé sur un support de fixation 610 d'un élément de bagage du motocycle.

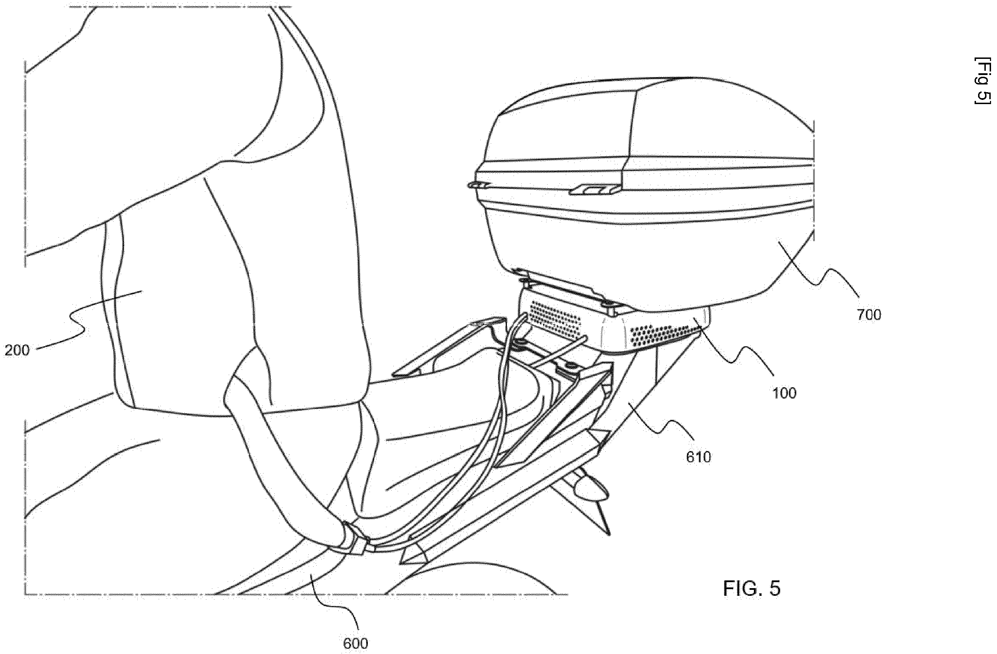

Sur la figure 5, on a représenté en plus un élément de bagage 700 fixé sur le module 100. Tel que cela est représenté, la conception particulière du module 100 autorise une intégration particulièrement discrète sur le motocycle 600. Il est visible que le module 100 est pris « en sandwich », ou en tenaille, entre l'élément de structure du motocycle et l'élément de bagage 700.

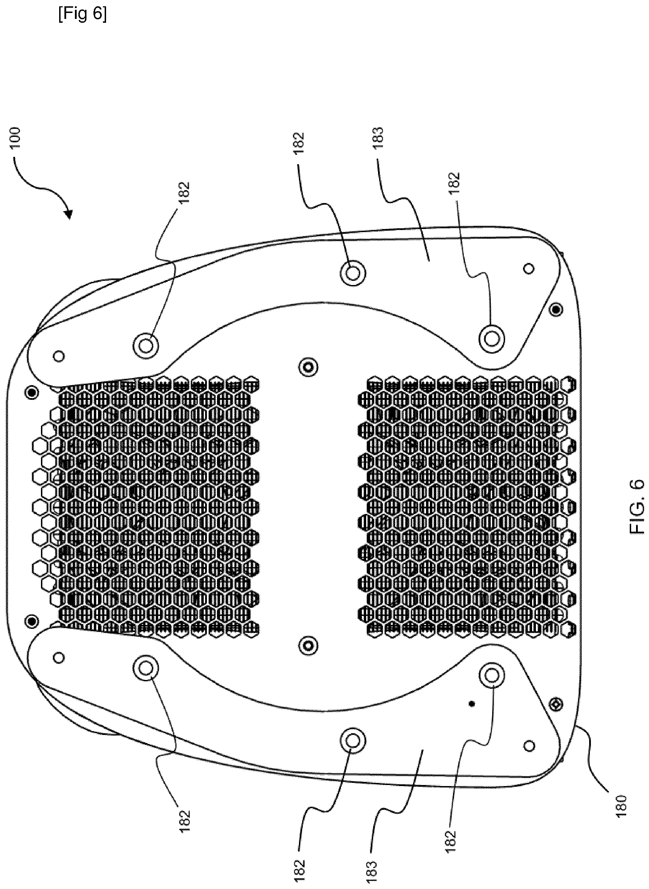

Tel que cela est représenté sur la figure 6, afin de réaliser la fixation sur le motocycle, le boitier 180 comporte sur une face inférieure 181 une pluralité de points d'ancrage 182 sur un élément de structure du motocycle 600. Les points d'ancrage 182 peuvent notamment être des ouvertures filetées, destinées à accueillir des vis de fixation. L'élément de structure du motocycle est en particulier un support de fixation d'un élément de bagage pour motocycle. Les supports de fixation peuvent être préexistant sur le motocycle, ou rapportés.

Afin de pallier au problème de supports de fixation propriétaires d'un fabricant de bagagerie pour motocycles, présentant un type de point d'ancrage particulier, les points d'ancrage 182 sont présentés sur une platine inférieure 183 fixée de façon amovible au corps du boitier 180. La fixation amovible se fait en particulier via un schéma de points de fixation universel, permettant d'adapter toute platine au boitier 180. La fixation peut se faire notamment par vissage. La face inférieure 181 correspond alors au plan dans lequel est disposée la platine inférieure 183, qui fait partie du boitier 180. De cette manière, il n'est nécessaire d'adapter que la platine inférieure 183 au support de fixation propriétaire, mais pas tout le reste du boitier 180.

En particulier, la platine inférieure 183 peut être réalisée en deux parties, tel que cela est représenté à la figure 6. La platine inférieure 183 prend par exemple la forme de deux ailes de fixation comportant chacune trois points d'ancrage 182.

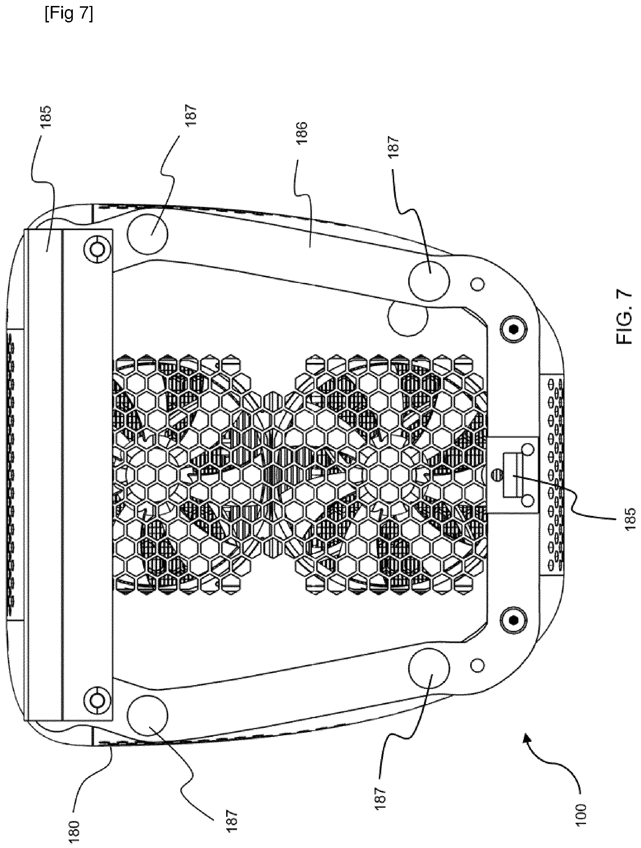

De manière similaire, tel que cela est représenté à la figure 7, afin de réaliser la fixation d'un élément de bagage 700 sur le boitier 180, le boitier 180 comporte sur une face supérieure 184 une pluralité de points de fixation 185 d'un élément de bagage 700. Les points de fixation 185 peuvent notamment être formés par un rail de maintien et un ergot de verrouillage disposés à des bords opposés de la face supérieure 184. Un tel type de fixation est notamment connu des éléments de bagage de type « top-case » du fabricant Givi (marque déposée).

Afin de pallier au problème de systèmes de fixation propriétaires d'un fabricant de bagagerie pour motocycles, présentant un type de point de fixation particulier, les points de fixation 185 sont présentés sur une platine supérieure 186 fixée de façon amovible au corps du boitier 180. La face supérieure 184 correspond alors au plan dans lequel est disposée la platine supérieure 186, qui fait partie du boitier 180. De cette manière, il n'est nécessaire d'adapter que la platine supérieure 186 à l'élément de bagage propriétaire, mais pas tout le reste du boitier 180.

Selon une variante préférentielle, la platine supérieure 186 reste inchangée pour tous les types d'éléments de bagage, et seuls les points de fixation 185 sont adaptés à l'élément de bagage. En d'autres termes, les points de fixation 185 peuvent être eux-mêmes amovibles sur la platine supérieure 186. Cette solution présente l'avantage d'une très grande flexibilité, toutefois elle est légèrement plus encombrante que la solution précitée intégrant directement les points de fixation 185 à la platine supérieure 186.

Par exemple, la platine supérieure 186 prend une forme d'anneau sensiblement rectangulaire, de dimension sensiblement égale à la face supérieure 184. Des plots de support 187 de l'élément de bagage 700 peuvent être prévu sur la platine supérieure 186.

Préférentiellement, il est prévu de mettre à disposition d'un utilisateur un jeu de platines inférieure 183 et supérieure 186, puisqu'un type particulier de support de fixation sera généralement utilisé avec un élément de bagage 700 compatible.

Selon une variante avantageuse, les points d'ancrage 182 sont disposés selon un schéma d'ancrage reproduit à au moins deux positions distinctes, de façon à permettre la fixation dans au moins deux positions de fixation du boitier 180 à l'élément de structure. Plus précisément, un ensemble de points d'ancrages 182 disposés selon un schéma particulier, correspondant à un type particulier de système d'ancrage pour bagages de motocycles, est reproduit dans une position légèrement différente. En particulier, le schéma est reproduit au moins un fois par translation selon l'axe de symétrie du boitier 180, correspondant sensiblement à l'axe d'avancement du motocycle. De cette manière, il est possible d'ajuster la position longitudinale du boitier 180 sur le motocycle, en sélectionnant le groupe de points d'ancrages adéquats.

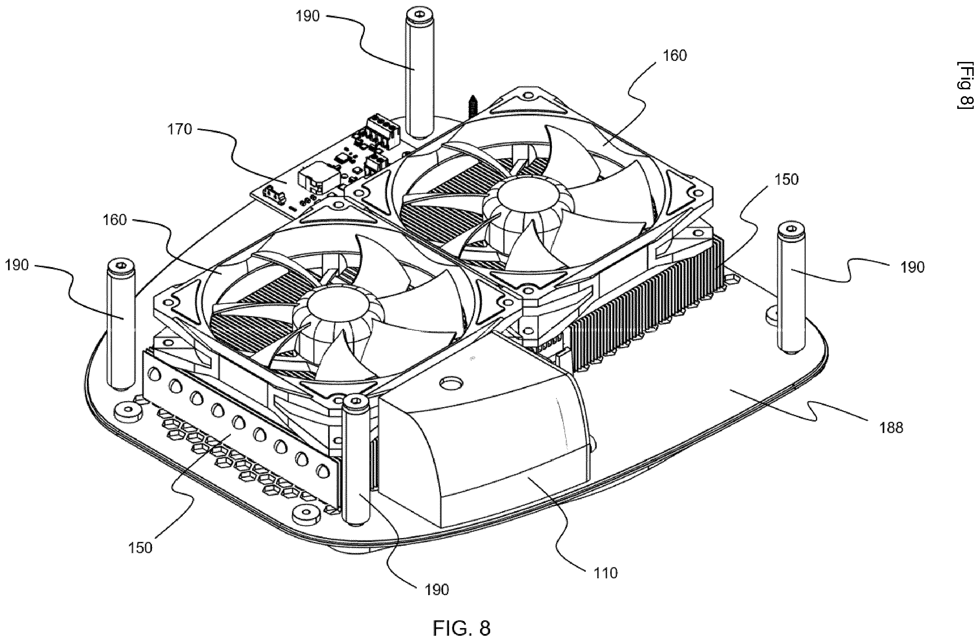

Selon une variante préférentielle, tel que cela est visible sur les figures 8 et 2, le corps du boitier 180 est constitué d'un fond plat 188, présentant à l'extérieur la face inférieure 181 du boitier 180, et d'une coque supérieure 189 fixée au fond plat 188. De cette manière, il n'est pas possible de démonter le boitier 180, en particulier lorsqu'un élément de bagage 700 est fixé sur le boitier 180.

La coque supérieure 189 est munie d'ouvertures laissant passer des mâts 190, ou mâts-entretoises 190, ces derniers jouant un rôle d'entretoise. Les mâts 190 servent à fixer la platine supérieure 186, par exemple par vissage dans les mâts 190. Lorsqu'un élément de bagage est fixé sur la platine supérieure 186, les mâts 190 sont couverts par l'élément de bagage et les vis fixant la platine supérieure 186 sur les mâts 190 ne sont pas accessibles. Cela prévient du vol du boitier 180, mais également du bagage qui est solidement fixé à la platine supérieure 186. La platine inférieure 183 et le fond plat 188 sont également fixés sur les mâts 190, en particulier par vissage. De cette manière, l'élément de bagage ne repose pas directement sur la coque supérieure 189 du boitier 180, mais directement sur la platine inférieure 183, fixée au fond plat 188. En d'autres termes, la platine supérieure 186 et la platine inférieure 183 sont liées directement par l'intermédiaire des mâts 190, le corps de boitier composé du fond plat 188 et de la coque supérieure 189 étant fixés entre les platines. Cela a pour effet d'améliorer la solidité du module 100. Cela permet également une arrivée d'air frais au radiateur 150, tel que cela est expliqué ci-dessous.

Il est envisageable de fixer la platine inférieure 183 au fond plat 188 sans fixer en même temps les mâts 190. Dans une telle configuration, il n'est pas possible de fixer de platine supérieure 186. Cette configuration est donc particulièrement adaptée au cas où aucun élément de bagage ne doit être transporté, l'encombrement du boitier 180 étant réduit et l'esthétique améliorée.

En particulier, la platine supérieure 186 est à distance d'une paroi supérieure du corps du boitier 180. En d'autres termes, les mâts 190 dépassent suffisamment du corps du boitier 180 pour laisser un espace entre la partie supérieure du corps du boitier 180 et la platine supérieure 186. Ainsi, on crée une arrivée d'air frais pénétrant dans le boitier 180 jusqu'au radiateur 150, en particulier sous l'action de ventilateurs 160 lorsque le module en est équipé.

La face inférieure 181 et la face supérieure 184 du boitier 180 sont distantes d'une distance h, correspondant à la hauteur, ou épaisseur, du boitier 180, et qui est sensiblement constante sur toute la largeur du boitier 180. En d'autres termes, la distance h correspond sensiblement à la distance entre les plans dans lesquels se trouvent les points d'ancrage 182 et points de fixation 185, présentés ou non sur des platines.

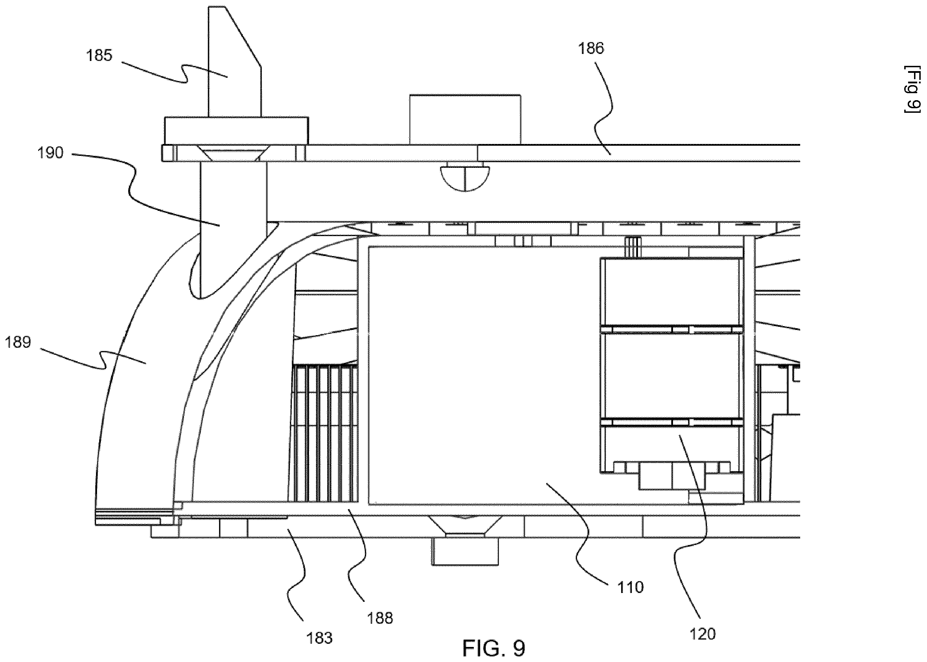

Afin de réduire encore davantage la hauteur h, le réservoir 110 peut être directement intégré dans la paroi inférieure du boitier 180, tel que cela est représenté sur la figure 9. En particulier lorsque le fond plat 188 est moulé (la coque supérieure 189 étant généralement également moulée), le réservoir 110 peut être directement moulé avec le fond plat. La paroi inférieure du réservoir 110 est donc directement formée par le fond plat 188. Cela permet d'éviter la fixation du réservoir 110 sur le fond plat, et permet en particulier de réduire davantage encore la hauteur h, en faisant l'économie d'une paroi inférieure du réservoir 110.

Un boitier 180 tel que présenté permet d'obtenir un module 100 particulièrement compact, et en particulier qui minimise la hauteur h, qui s'intègre parfaitement sur un motocycle, et qui s'adapte facilement à des éléments standardisés.

Toutefois, une conception compacte du module 100 seule ne permet pas de garantir un fonctionnement adéquat.

Afin de garantir un fonctionnement adéquat du module 100, notamment en ce qui regarde la dissipation thermique, et plus largement l'échange de chaleur avec l'environnement, tout en contribuant à obtenir un boitier de hauteur h réduite, un certain nombre d'agencements particulièrement astucieux et efficaces sont proposés.

Tout d'abord, l'élément d'échange thermique 130 est mis à distance des parois du boitier 180 grâce à un moyen de mise à distance. En effet, il n'est pas souhaitable de permettre un transfert de chaleur depuis ou vers l'élément d'échange thermique 130 du côté de la paroi du boitier 180.

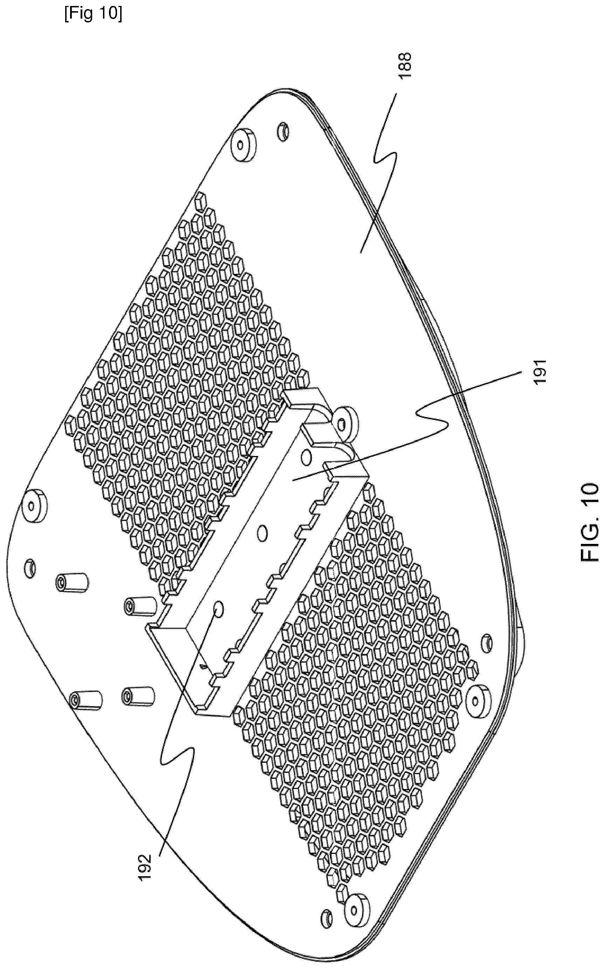

L'élément d'échange thermique 130 est disposé à un emplacement de fixation 191 de l'élément d'échange thermique 130. L'emplacement de fixation 191 est préférentiellement situé sur le fond plat 188. L'emplacement de fixation 191 prend par exemple la forme d'une zone délimitée par une paroi périphérique s'étendant saillante du fond plat 188, conformée à l'élément d'échange thermique 130 de façon à le maintenir en place latéralement, tel que cela est représenté à la figure 10. La paroi périphérique peut notamment être directement moulée sur le fond plat 188.

L'emplacement de fixation 191 de l'élément d'échange thermique présente un moyen 192 de mise à distance de l'élément d'échange thermique 130 des parois du boitier 180. En particulier, le moyen 192 de mise à distance peut être formé par une pluralité de plots. Les plots peuvent être répartis sur le fond plat 188 dans la zone de l'emplacement de fixation 191, de manière à supporter convenablement l'élément d'échange thermique 130. Préférentiellement, le nombre de plots est compris en quatre et huit, par exemple six. Les plots sont avantageusement particulièrement plats, c'est-à-dire qu'ils s'étendent à partir du fond plat 188 sur une hauteur inférieure à 0.5 millimètre. Ainsi, la hauteur h du boitier reste la plus faible possible, tout en maintenant l'élément d'échange thermique 130 légèrement à distance des parois du boitier 180. Ainsi, une couche d'air isolante peut se former entre l'élément d'échange thermique et les parois du boitier. Ceci a pour effet de casser le pont thermique qui serait formé si l'élément d'échange thermique 130 était fixé directement contre les parois du boitier 180.

Selon une alternative, une bande de matière, par exemple de mousse, isolante, peut être utilisée comme moyen 192 de mise à distance en lieu et place des plots. Il est toutefois privilégié d'utiliser des plots qui peuvent être notamment moulé directement avec le fond plat 188, ce qui a pour effet de réduire le nombre d'étapes de fabrication.

Un autre agencement particulièrement efficace est l'utilisation de radiateur de type « à caloduc ». Selon l'invention, la seconde face 142 d'échange de chaleur avec l'environnement du dispositif thermoélectrique 140 est en liaison thermique avec au moins un radiateur 150 de type « à caloduc ».

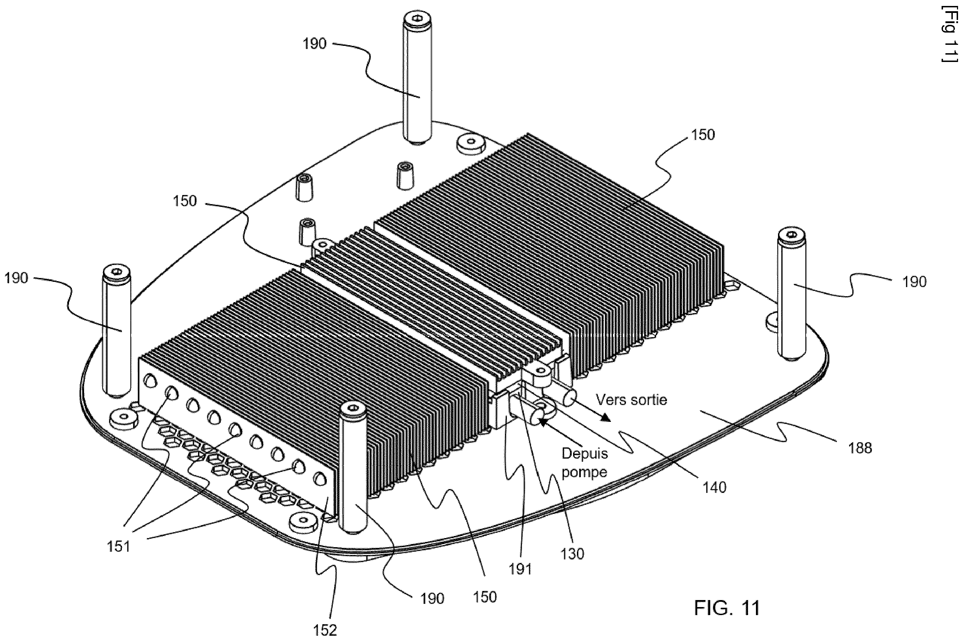

Tel que cela est représenté à la figure 11, le radiateur 150 s'étend dans une direction orthogonale à la hauteur h.

Le type de radiateur 150 à caloduc est connu en soit de la technique. Il se compose notamment d'un ou plusieurs tubes 151 longitudinaux parallèles, dans lesquels un fluide à l'état d'équilibre liquide-vapeur est renfermé. La chaleur est transférée de la source chaude à la source froide par changement d'état, en particulier par condensation. Ce type de radiateur permet d'atteindre des transferts thermiques beaucoup plus importants que par l'utilisation du simple principe de conduction d'un radiateur traditionnel.

Une pluralité d'ailettes 152 orthogonales aux tubes relie les tubes 151, et permet de mieux transférer la chaleur. Le radiateur 150 représenté sur la figure 11 comprend plusieurs dizaines d'ailettes, présentant ainsi une grande surface d'échange de chaleur. Par exemple, une surface d'échange de chaleur comprise entre 0.5 et 2 mètres carrés peut être obtenue.

La très grande efficacité induite par l'utilisation de ce type particulier de radiateurs est renforcée encore d'avantage par l'agencement dans la largeur du boitier 180, et selon la direction orthogonale à la hauteur h. Une grande surface de transfert thermique est obtenue, sans augmenter la hauteur h mais tout en bénéficiant d'un échange de chaleur très performant.

Cet effet est encore renforcé par un centrage de l'emplacement de fixation 191 de l'élément d'échange thermique 130 sur la paroi inférieure du boitier, c'est-à-dire en particulier sur le fond plat 188. Le radiateur 150 s'étend alors de part et d'autre dudit emplacement 191, sensiblement jusqu'aux parois latérales du boitier 180. La position sensiblement centrale permet de maximiser l'échange de chaleur en plaçant la source chaude au centre, et en positionnant les extrémités des radiateurs 150, c'est-à-dire les sources froides, à la distance maximale de la source chaude.

On comprend donc que c'est la partie centrale du radiateur 150 représenté à la figure 11, de hauteur réduite, qui est en liaison thermique avec le dispositif Peltier 140. A cet endroit, l'élément d'échange thermique 130, le dispositif Peltier 140 et le radiateur 150 sont empilés, et forment une structure semblable à celle représentée schématiquement à la figure 1. De part et d'autre de la position centrale, le radiateur 150 occupe toute la hauteur de l'empilement, de façon à maximiser les surfaces d'échange thermique.

La hauteur h ainsi déjà abaissée à l'extrême peut l'être encore davantage en sélectionnant des ventilateurs 160 d'épaisseur réduite par rapport à un ventilateur standard utilisés habituellement pour des modules 100. L'utilisation de tels ventilateurs particulièrement plats n'est possible qu'en raison de la performance très importante du système de dissipation de chaleur proposé, car il est ainsi possible de faire l'économie de ventilateurs à débit plus important.

Afin de permettre un montage simplifié, le ou les ventilateurs 160 peuvent être simplement emmanchés dans des doigts saillants de la coque supérieure 189. L'empilement des composants entre le fond plat 188 et la coque supérieure 189 procure en effet un maintien suffisant dans le sens de l'épaisseur du boitier 180 sans qu'il soit besoin d'une fixation supplémentaire.

Par ailleurs, des perforations peuvent être pratiquées dans le fond plat 188 et la coque supérieure 189 afin de favoriser l'entrée et la sortie d'air frais dans le boitier, permettant un meilleur transfert thermique.

Par l'ensemble de ces dispositions, on comprend que la hauteur h du boitier 180 est minimisée et que l'échange de chaleur avec l'environnement est maximisé. On obtient alors un boitier 180 répondant à toutes les attentes d'intégration sur un motocycle, ainsi qu'aux attentes de performance malgré le caractère compact du module 100.

On précise que le boitier 180 peut également être disposé latéralement sur un élément de structure d'un motocycle, notamment pour être pris « en sandwich » entre un support latéral et une sacoche latérale pour motocycle. Dans ce cas, la hauteur h du boitier s'étend sensiblement horizontalement, perpendiculairement à la direction d'avancement du motocycle. Les faces inférieure 181 et supérieure 184 sont donc orientées latéralement, respectivement vers l'intérieur et l'extérieur du motocycle. On comprend que les termes inférieur et supérieur utilisés dans la présente description sont considérés dans le référentiel du boitier 180, dans lequel la face inférieure et supérieure sont séparées par la hauteur h, ou épaisseur, du boitier. Sur les figures, les faces inférieure et supérieure sont disposées l'une au-dessus de l'autre selon une direction sensiblement orthogonale au sol sur lequel évolue le motocycle, toutefois dans d'autres utilisation les faces supérieure et inférieure peuvent être disposées l'une au-dessus de l'autre selon une direction différente, notamment sensiblement parallèle au sol sur lequel évolue le motocycle.

### Autres avantages et caractéristiques optionnelles

D'autres caractéristiques optionnelles, non représentées sur les figures, peuvent également être envisagées. Ces caractéristiques peuvent notamment être combinées selon toutes les combinaisons possibles.

Comme il a été indiqué plus haut, le raccordement entre le module 100 et le vêtement 200 peut être effectué indirectement au moyen d'un conduit de raccordement, par exemple souple. Ceci est particulièrement le cas lorsque le module 100 et le vêtement 200 possèdent chacun un raccord. Il est aussi possible que le conduit débouchant du module 100 soit prolongé directement par un conduit, en particulier souple, et qu'un seul raccord soit présent sur le vêtement 200.

Dans les deux cas, il est avantageux de pouvoir stocker le conduit reliant le module 100 et le vêtement 200.

Ainsi, il est possible de prévoir une trappe sur l'une des parois latérales du boitier 180, accessible depuis l'extérieur du boitier, et ouvrant sur une cavité adaptée pour contenir un conduit, notamment un conduit souple, dans une position de rangement.

La cavité peut être réalisée de manière similaire au réservoir 110, et la trappe peut par exemple être agencée de manière pivotante sur le boitier.

De cette manière, l'utilisateur peut stocker le conduit de raccordement au vêtement de régulation thermique lorsqu'il quitte son véhicule, sans être gêné par la présence du conduit. Le conduit est par ailleurs disposé à l'abri des détériorations. La trappe peut notamment être verrouillée par un moyen adapté, tel une serrure.

Afin de simplifier le rangement du conduit, en particulier lorsqu'il est souple et apte à être enroulé, il est possible de prévoir un enrouleur automatique. Un enrouleur automatique se présente sous la forme d'une bobine sur laquelle le conduit peut-être enroulée, et qui est amenée à tourner dans un sens d'enroulement sous l'effet, par exemple, d'un ressort. Ainsi, le conduit a tendance à être entrainé en position d'enroulement. Afin de de maintenir le conduit souple de raccordement au vêtement de régulation thermique en position d'utilisation, un moyen de blocage du conduit souple dans une position déroulée variable est prévu. Ce moyen peut notamment bloquer directement le conduit de sorte à empêcher son enroulement, par exemple en le pinçant légèrement, ou encore bloquer directement l'enrouleur, par exemple par l'utilisation d'un frein de position.

Par ailleurs, dans un cas où le conduit de raccordement ne serait pas entièrement stocké dans le boitier 180 dans une position de rangement, il est possible de prévoir une zone aimantée sur l'une des parois latérales du boitier 180. En coopération avec une extrémité du conduit de raccordement également aimantée, ou métallique, il est possible de maintenir en position l'extrémité du conduit contre le boitier 180. Cela permet d'une part de garantir un stockage adéquat du conduit, tout en permettant à un utilisateur de s'en saisir rapidement et simplement, lorsqu'il souhaite raccorder le conduit au vêtement 200.

Un autre aspect particulièrement important d'un système de régulation thermique est sa consommation électrique. En effet, le module 100 est relié électriquement notamment à une batterie 400 de motocycle, et celle-ci possède une capacité limitée. En règle générale, toute utilisation de la batterie 400 lorsque le moteur du motocycle est éteint entraîne une baisse rapide de son niveau de charge, cette dernière n'étant en générale pas prévue pour faire fonctionner des appareils externes. Cet aspect est moins critique en ce qui concerne les motocycles électriques, qui disposent généralement d'une batterie de capacité plus conséquente.

Afin de pallier au problème de sollicitation trop importante de la batterie 400 lorsque le moteur d'un motocycle thermique est éteint, il est prévu de limiter la mise en marche du module 100 aux périodes d'allumage du moteur.

Pour cela, l'unité de commande 170 est configurée pour détecter un bruit de fond du signal électronique provenant de la source de courant continu, c'est-à-dire notamment de la batterie 400. Par bruit de fond, on entend des fluctuations du courant électrique provenant de la batterie, et qui traduisent la présence de consommateurs ou producteurs branchés sur la batterie 400. Un tel bruit de fond est particulièrement important lorsque l'alternateur du moteur tourne et alimente la batterie 400, c'est-à-dire lorsque le moteur thermique est en fonctionnement.

Lorsqu'aucun bruit de fond est détecté, l'unité est configurée pour éteindre le module 100. En effet, une telle situation traduit le fait que le moteur ne tourne plus, et que le risque que la batterie 400 se décharge rapidement est grand.

Enfin, un aspect important concerne le vêtement 200 de régulation thermique en tant que tel. En effet, les vêtements thermorégulant connus sont peu esthétiques, et ne présentent que des propriétés de confort, mais non pas de sécurité.

Afin de pallier le premier inconvénient, le vêtement 200 de régulation thermique peut être conçu selon une structure en double peau. Le vêtement 200 comporte alors une double peau fermée préférentiellement par couture, ou par soudage, en périphérie du vêtement 200. Le conduit parcourant le vêtement 200 de régulation thermique est alors collé sur la peau interne de la double peau, c'est-à-dire du côté du porteur du vêtement. Le conduit est collé sur la peau interne du côté intérieur de la double peau. De cette manière, la peau externe ne prend pas la forme du conduit parcourant le vêtement 200, comme cela peut être le cas dans l'art antérieur. Le rendu est beaucoup plus plaisant esthétiquement, la peau externe étant libre par rapport à la peau interne et présente un aspect plus lisse et naturel.

Afin de pallier le second inconvénient, le vêtement 200, le vêtement 200 de régulation thermique est également un vêtement de sécurité. Plus précisément, le vêtement 200 possède également une fonction « airbag » visant à protéger le porteur en cas de chute. Pour cela, le vêtement 200 comporte un coussin gonflable de type « airbag ». Le conduit du vêtement 200 de régulation thermique est soudé, préférentiellement par soudage haute fréquence, sur une face intérieure du coussin gonflable. Lorsque la fonction airbag n'est utilisée, pratiquement rien ne distingue le vêtement 200 de régulation et de sécurité d'un vêtement de régulation simple. De manière étonnante, il a été constaté que la combinaison des fonctions de régulation et de sécurité était possible sans dégradation de l'une ou l'autre des fonctions, et sans que l'aspect et le confort du vêtement 200 ne soient dégradés.

## Revendications

1. Module (100) de régulation thermique pour un système (10) de régulation thermique de tout ou partie du corps d'un individu, notamment d'un motocycliste, comportant un circuit fluidique ouvert comprenant :
- un réservoir (110) de compensation adapté pour contenir un volume de fluide caloporteur,
- une pompe (120) adaptée pour faire circuler ledit fluide caloporteur dans ledit circuit fluidique ouvert,
- un élément d'échange thermique (130) adapté pour la circulation dudit fluide caloporteur, ledit élément d'échange thermique (130) étant en liaison thermique avec une première face (141) d'échange de chaleur d'un dispositif thermoélectrique (140) à effet Peltier adapté pour être relié électriquement à une source (400) de courant continu, le dispositif thermoélectrique (140) présentant une seconde face (142) d'échange de chaleur avec l'environnement,
ledit réservoir (110), ladite pompe (120) et ledit élément d'échange thermique (130) étant reliés fluidiquement,
**caractérisé en ce que** ledit réservoir (110), ladite pompe (120) et ledit élément d'échange thermique (130) sont disposés dans le corps d'un boitier (180), et ledit circuit fluidique ouvert présente une ouverture d'entrée et une ouverture de sortie débouchant respectivement dudit boitier (180), les ouvertures d'entrée et de sortie étant adaptées pour être raccordées, directement ou indirectement via un conduit souple, respectivement à une extrémité d'un conduit d'un vêtement (200) de régulation thermique de sorte à former un circuit fluidique fermé,
- ledit boitier (180) comprend une face inférieure (181) présentant une pluralité de points d'ancrage (182) sur un élément de structure (610) d'un motocycle, notamment sur un support de fixation d'un élément de bagage pour motocycle de type « top-case » ou sacoche, et une face supérieure (184) présentant une pluralité de points de fixation (185) d'un élément de bagage (700) pour motocycle de type « top-case » ou sacoche, lesdites face inférieure (181) et face supérieure (184) étant distantes d'une hauteur h,
- ledit boitier (180) comporte un emplacement de fixation (191) de l'élément d'échange thermique (130) présentant un moyen (192) de mise à distance de l'élément d'échange thermique (130) des parois du corps du boitier (180),
- ladite face (142) d'échange de chaleur avec l'environnement est en liaison thermique avec au moins un radiateur (150) de type « à caloduc » s'étendant dans une direction orthogonale à la hauteur h.

2. Module (100) selon la revendication précédente, dans lequel les points d'ancrage (182) sont présentés sur une platine inférieure (183) fixée de façon amovible au corps du boitier (180).

3. Module (100) selon l'une quelconque des revendications précédentes, dans lequel les points de fixation (185) sont présentés sur une platine supérieure (186) fixée de façon amovible au corps du boitier (180).

4. Module (100) selon l'une quelconque des revendications précédentes, dans lequel les points d'ancrage (182) sont disposés selon un schéma d'ancrage reproduit à au moins deux positions distinctes, de façon à permettre la fixation dans au moins deux positions de fixation du boitier (180) audit élément de structure (610).

5. Module (100) selon l'une quelconque des revendications précédentes, dans lequel ledit moyen de mise à distance est formé par une pluralité de plots (192) moulés sur une paroi inférieure du corps du boitier (180), les plots (192) étant adaptés pour supporter ledit élément d'échange thermique (130).

6. Module (100) selon l'une quelconque des revendications 1 à 4, dans lequel ledit moyen de mise à distance est une couche de matière isolante disposée contre une paroi inférieure du corps du boitier (180).

7. Module (100) selon l'une quelconque des revendications précédentes, dans lequel l'emplacement de fixation (191) de l'élément d'échange thermique (130) est sensiblement centré sur une paroi inférieure du corps du boitier (180), et dans lequel ledit radiateur (150) s'étend au moins de part et d'autre dudit emplacement (191), sensiblement jusqu'aux parois latérales dudit corps de boitier (180), et dans lequel, préférentiellement, ledit réservoir (110) est directement intégré dans la paroi inférieure dudit corps de boitier (180).

8. Module (100) selon l'une quelconque des revendications précédentes, dans lequel le corps de boitier (180) comprend une zone aimantée sur l'une de ses parois latérales.

9. Module (100) selon l'une quelconque des revendications précédentes, dans lequel le boitier (180) comprend une trappe sur l'une de ses parois latérales, accessible le depuis l'extérieur du boitier (180), ouvrant sur une cavité adaptée pour contenir conduit souple de raccordement au vêtement (200) de régulation thermique dans une position de rangement.

10. Module (100) selon l'une quelconque des revendications précédentes, dans lequel le boitier (180) comprend un enrouleur automatique, préférentiellement à ressort, du conduit souple de raccordement au vêtement (200) de régulation thermique, et un moyen de blocage dudit conduit souple dans une position déroulée variable.

11. Module (100) selon l'une quelconque des revendications précédentes, dans lequel le module comprend également une unité de commande (170) reliée audit dispositif thermoélectrique (140) et à ladite pompe (120), et configurée au moins pour allumer et éteindre ledit module (100), et réguler une température de service ou réguler une puissance consommée par le dispositif thermoélectrique (140), et dans lequel, préférentiellement,
l'unité de commande (170) comprend un moyen de communication sans fil avec une télécommande (500) dudit module, ladite télécommande (500) étant configurée au moins pour allumer et éteindre ledit module (100), et régler une température de consigne du corps de l'individu ou réguler un niveau de puissance consommée par le dispositif thermoélectrique (140), et/ou préférentiellement, l'unité de commande (170) est configurée pour
- détecter un bruit de fond du signal électronique provenant de la source de courant continu, dans lequel la source de courant continu est un accumulateur externe audit module, notamment un accumulateur (400) de motocycle ;
et lorsqu'aucun bruit de fond est détecté ;
- éteindre le module (100).

12. Système (10) de régulation thermique de tout ou partie du corps d'un individu, notamment d'un motocycliste, comprenant un module (100) de régulation thermique selon l'une des revendications 1 à 11, et un vêtement (200) de régulation thermique, les ouvertures d'entrée et de sortie dudit module (100) étant raccordées, directement ou indirectement via un conduit souple, respectivement à une extrémité d'un conduit du vêtement (200) de régulation thermique.

13. Système (10) selon la revendication 12, dans lequel le vêtement (200) de régulation thermique comporte une double peau fermée par couture en périphérie du vêtement (200), et dans lequel le conduit du vêtement de régulation thermique est collé sur la peau interne de la double peau, de façon à se trouver à l'intérieur de la double peau.

14. Système (10) selon la revendication 12, dans lequel le vêtement (200) de régulation thermique est également un vêtement de sécurité et comporte un coussin gonflable de type « airbag », le conduit du vêtement de régulation thermique étant soudé, préférentiellement par soudage haute fréquence, sur une face intérieure dudit coussin gonflable.

15. Ensemble comprenant un motocycle (600) et un système (10) de régulation thermique de tout ou partie du corps d'un individu, notamment d'un motocycliste, selon l'une des revendications 12 à 14, et dans lequel ledit module (100) est relié électriquement à un accumulateur (400) du motocycle, et relié mécaniquement à un élément de structure (610) du motocycle, en particulier à un support de fixation d'un élément de bagage pour motocycle de type « top-case » ou sacoche, via ladite pluralité de points d'ancrage (182), et comprenant préférentiellement en outre un élément de bagage (700) pour motocycle de type « top-case » ou sacoche fixé sur ledit module (100) via ladite pluralité de points de fixation (185), de sorte que ledit boitier (180) soit pris « en sandwich » entre ledit élément de structure (610) du motocycle et ledit élément de bagage (700) pour motocycle.

## Patentansprüche

1. Modul (100) zur thermischen Regelung für ein System (10) zur thermischen Regelung des gesamten Körpers oder eines Teils des Körpers eines Individuums, insbesondere eines Motorradfahrers, umfassend einen offenen Fluidkreislauf mit:
- einem Ausgleichsbehälter (110), der dazu ausgelegt ist, ein Volumen eines Wärmeträgerfluids zu enthalten,
- einer Pumpe (120), die dazu ausgelegt ist, das Wärmeträgerfluid in dem offenen Fluidkreislauf zirkulieren zu lassen,
- einem Wärmeaustauschelement (130), das für die Zirkulation des Wärmeträgerfluids ausgelegt ist, wobei das Wärmeaustauschelement (130) in thermischer Verbindung mit einer ersten Wärmeaustauschfläche (141) einer thermoelektrischen Vorrichtung (140) mit Peltier-Effekt steht, die dazu ausgelegt ist, elektrisch mit einer Gleichstromquelle (400) verbunden zu werden, wobei die thermoelektrische Vorrichtung (140) eine zweite Wärmeaustauschfläche (142) mit der Umgebung aufweist,
wobei der Ausgleichsbehälter (110), die Pumpe (120) und das Wärmeaustauschelement (130) fluidisch miteinander verbunden sind,
**dadurch gekennzeichnet, dass** der Ausgleichsbehälter (110), die Pumpe (120) und das Wärmeaustauschelement (130) im Inneren eines Gehäuses (180) angeordnet sind und der offene Fluidkreislauf eine Eintrittsöffnung und eine Austrittsöffnung aufweist, die jeweils aus dem Gehäuse (180) herausführen, wobei die Eintritts- und Austrittsöffnungen dazu ausgelegt sind, direkt oder indirekt über eine flexible Leitung jeweils mit einem Ende einer Leitung eines Kleidungsstücks (200) zur thermischen Regelung verbunden zu werden, so dass ein geschlossener Fluidkreislauf gebildet wird,
- wobei das Gehäuse (180) eine Unterseite (181) aufweist, die eine Vielzahl von Befestigungspunkten (182) an einem Strukturelement (610) eines Motorrads aufweist, insbesondere an einem Befestigungsträger für ein Gepäckelement für Motorräder vom Typ "Topcase" oder Tasche, und eine Oberseite (184) aufweist, die eine Vielzahl von Befestigungspunkten (185) für ein Gepäckelement (700) für Motorräder vom Typ "Topcase" oder Tasche aufweist, wobei die Unterseite (181) und die Oberseite (184) um eine Höhe h voneinander beabstandet sind,
- wobei das Gehäuse (180) eine Befestigungsaufnahme (191) für das Wärmeaustauschelement (130) umfasst, die ein Mittel (192) zur Abstandshalterung des Wärmeaustauschelements (130) von den Wänden des Gehäusekörpers (180) aufweist,
- wobei die Wärmeaustauschfläche (142) mit der Umgebung in thermischer Verbindung mit mindestens einem Wärmetauscher (150) vom Typ "Wärmerohr" steht, der sich in einer Richtung erstreckt, die orthogonal zur Höhe h ist.

2. Modul (100) nach dem vorhergehenden Anspruch, bei dem die Befestigungspunkte (182) auf einer unteren Platte (183) vorgesehen sind, die lösbar am Gehäusekörper (180) befestigt ist.

3. Modul (100) nach einem der vorhergehenden Ansprüche, bei dem die Befestigungspunkte (185) auf einer oberen Platte (186) vorgesehen sind, die lösbar am Gehäusekörper (180) befestigt ist.

4. Modul (100) nach einem der vorhergehenden Ansprüche, bei dem die Befestigungspunkte (182) gemäß einem Befestigungsschema angeordnet sind, das an mindestens zwei unterschiedlichen Positionen reproduziert ist, so dass die Befestigung des Gehäuses (180) an dem Strukturelement (610) in mindestens zwei Befestigungspositionen ermöglicht wird.

5. Modul (100) nach einem der vorhergehenden Ansprüche, bei dem das Abstandshaltermittel durch eine Vielzahl von Noppen (192) gebildet ist, die an einer unteren Wand des Gehäusekörpers (180) angeformt sind, wobei die Noppen (192) dazu ausgelegt sind, das Wärmeaustauschelement (130) zu tragen.

6. Modul (100) nach einem der Ansprüche 1 bis 4, bei dem das Abstandshaltermittel eine Schicht aus isolierendem Material ist, die an einer unteren Wand des Gehäusekörpers (180) angeordnet ist.

7. Modul (100) nach einem der vorhergehenden Ansprüche, bei dem die Befestigungsaufnahme (191) des Wärmeaustauschelements (130) im Wesentlichen mittig an einer unteren Wand des Gehäusekörpers (180) angeordnet ist und bei dem sich der Wärmetauscher (150) mindestens zu beiden Seiten der Befestigungsaufnahme (191) im Wesentlichen bis zu den Seitenwänden des Gehäusekörpers (180) erstreckt, und wobei vorzugsweise der Ausgleichsbehälter (110) direkt in die untere Wand des Gehäusekörpers (180) integriert ist.

8. Modul (100) nach einem der vorhergehenden Ansprüche, bei dem der Gehäusekörper (180) an einer seiner Seitenwände eine magnetisierte Zone umfasst.

9. Modul (100) nach einem der vorhergehenden Ansprüche, bei dem das Gehäuse (180) eine Klappe an einer seiner Seitenwände umfasst, die von außerhalb des Gehäuses (180) zugänglich ist und sich zu einem Hohlraum öffnet, der dazu ausgelegt ist, die flexible Leitung zur Verbindung mit dem Kleidungsstück (200) zur thermischen Regelung in einer Aufbewahrungsposition aufzunehmen.

10. Modul (100) nach einem der vorhergehenden Ansprüche, bei dem das Gehäuse (180) eine automatische Aufrollvorrichtung, vorzugsweise federbelastet, für die flexible Leitung zur Verbindung mit dem Kleidungsstück (200) zur thermischen Regelung umfasst sowie ein Mittel zum Arretieren der flexiblen Leitung in einer variablen ausgezogenen Position.

11. Modul (100) nach einem der vorhergehenden Ansprüche, bei dem das Modul ferner eine Steuereinheit (170) umfasst, die mit der thermoelektrischen Vorrichtung (140) und der Pumpe (120) verbunden ist und zumindest dazu konfiguriert ist, das Modul (100) ein- und auszuschalten sowie eine Betriebstemperatur zu regeln oder eine vom thermoelektrischen Element (140) verbrauchte Leistung zu regeln, und wobei vorzugsweise die Steuereinheit (170) ein drahtloses Kommunikationsmittel mit einer Fernbedienung (500) des Moduls umfasst, wobei die Fernbedienung (500) zumindest dazu konfiguriert ist, das Modul (100) ein- und auszuschalten sowie eine Solltemperatur des Körpers des Individuums einzustellen oder ein Leistungsniveau des thermoelektrischen Elements (140) zu regeln, und/oder vorzugsweise die Steuereinheit (170) dazu konfiguriert ist,
- ein Hintergrundrauschen des elektronischen Signals von der Gleichstromquelle zu detektieren, wobei die Gleichstromquelle ein externer Akkumulator des Moduls ist, insbesondere ein Akkumulator (400) eines Motorrads;
und wenn kein Hintergrundrauschen detektiert wird;
- das Modul (100) auszuschalten.

12. System (10) zur thermischen Regelung des gesamten Körpers oder eines Teils des Körpers eines Individuums, insbesondere eines Motorradfahrers, umfassend ein Modul (100) zur thermischen Regelung nach einem der Ansprüche 1 bis 11 und ein Kleidungsstück (200) zur thermischen Regelung, wobei die Eintritts- und Austrittsöffnungen des Moduls (100) direkt oder indirekt über eine flexible Leitung jeweils mit einem Ende einer Leitung des Kleidungsstücks (200) zur thermischen Regelung verbunden sind.

13. System (10) nach Anspruch 12, bei dem das Kleidungsstück (200) zur thermischen Regelung eine doppelte Schicht aufweist, die durch eine Naht am Umfang des Kleidungsstücks (200) geschlossen ist, und bei dem die Leitung des Kleidungsstücks zur thermischen Regelung auf die innere Schicht der doppelten Schicht aufgeklebt ist, so dass sie sich innerhalb der doppelten Schicht befindet.

14. System (10) nach Anspruch 12, bei dem das Kleidungsstück (200) zur thermischen Regelung zugleich ein Sicherheitskleidungsstück ist und ein aufblasbares Kissen vom Typ "Airbag" umfasst, wobei die Leitung des Kleidungsstücks zur thermischen Regelung vorzugsweise durch Hochfrequenzschweißen auf einer Innenseite des aufblasbaren Kissens verschweißt ist.

15. Anordnung umfassend ein Motorrad (600) und ein System (10) zur thermischen Regelung des gesamten Körpers oder eines Teils des Körpers eines Individuums, insbesondere eines Motorradfahrers, nach einem der Ansprüche 12 bis 14, wobei das Modul (100) elektrisch mit einem Akkumulator (400) des Motorrads verbunden ist und mechanisch mit einem Strukturelement (610) des Motorrads verbunden ist, insbesondere mit einem Befestigungsträger für ein Gepäckelement für Motorräder vom Typ "Topcase" oder Tasche, über die Vielzahl von Befestigungspunkten (182), und ferner vorzugsweise ein Gepäckelement (700) für Motorräder vom Typ "Topcase" oder Tasche umfasst, das über die Vielzahl von Befestigungspunkten (185) an dem Modul (100) befestigt ist, so dass das Gehäuse (180) zwischen dem Strukturelement (610) des Motorrads und dem Gepäckelement (700) für Motorräder eingespannt ist.

## Claims

1. Thermal control module (100) for a system (10) for thermally controlling all or a portion of a person's, in particular a motorcyclist's, body, including an open fluidic circuit comprising:
- a compensation reservoir (110) adapted to contain a volume of heat transfer fluid,
- a pump (120) adapted to circulate said heat transfer fluid in said open fluidic circuit,
- a heat exchange element (130) adapted for the circulation of said heat transfer fluid, said heat exchange element (130) being thermally connected to a first heat exchange face (141) of a Peltier-effect thermoelectric device (140) adapted to be electrically connected to a direct current source (400), the thermoelectric device (140) having a second heat exchange face (142) with the surrounding area,
said reservoir (110), said pump (120) and said heat exchange element (130) being fluidically connected
**characterised in that** said reservoir (110), said pump (120) and said heat exchange element (130) are disposed in the body of a housing (180), and said open fluidic circuit has an inlet opening and an outlet opening evacuating respectively from said housing (180), the inlet and outlet openings being adapted to be connected, directly or indirectly via a flexible conduit, respectively to an end of a conduit of an item of thermal control clothing (200) so as to form a closed fluidic circuit,
- said housing (180) comprises a lower face (181) having a plurality of anchor points (182) on a structural element (610) of a motorcycle, in particular on a bracket for mounting a "top-case" or saddlebag type luggage item for a motorcycle, and an upper face (184) having a plurality of points (185) for mounting a "top-case" or saddlebag type luggage item (700) for a motorcycle, said lower (181) and upper (184) faces being separated by a height h,
- said housing (180) has a location (191) for mounting the heat exchange element (130) having a means (192) for distancing the heat exchange element (130) from the walls of the housing (180),
- said heat exchange face (142) with the surrounding area is thermally connected to at least one "heat-pipe" type radiator (150) extending in a direction orthogonal to the height h.

2. Module (100) according to the preceding claim, wherein the anchor points (182) are presented on a lower plate (183) mounted removably on the body of the housing (180).

3. Module (100) according to any one of the preceding claims, wherein the mounting points (185) are presented on an upper plate (186) mounted removably on the body of the housing (180).

4. Module (100) according to any one of the preceding claims, wherein the anchor points (182) are disposed according to an anchoring pattern reproduced at at least two separate positions, so as to allow the mounting in at least two mounting positions of the housing (180) on said structural element (610).

5. Module (100) according to any one of the preceding claims, wherein said distancing means is formed by a plurality of blocks (192) moulded on a lower wall of the body of the housing (180), the blocks (192) being adapted to support said heat exchange element (130).

6. Module (100) according to any one of claims 1 to 4, wherein said distancing means is a layer of insulating material disposed against a lower wall of the body of the housing (180).

7. Module (100) according to any one of the preceding claims, wherein the location (191) for mounting the heat exchange element (130) is substantially centred on a lower wall of the body of the housing (180), and wherein said radiator (150) extends at least on either side of said location (191), substantially to the lateral walls of said body of the housing (180), and wherein said reservoir (110) is directly integrated in the lower wall of said housing (180) body.

8. Module (100) according to any one of the preceding claims, wherein the housing (180) body comprises a magnetised zone on one of its lateral walls.

9. Module (100) according to any one of the preceding claims, wherein the housing (180) comprises a hatch on one of its lateral walls, accessible from the exterior of the housing (180), opening onto a cavity adapted to contain the flexible conduit for connecting to the item of thermal control clothing (200) in a storage position.

10. Module (100) according to any one of the preceding claims, wherein the housing (180) comprises an automatic reel, preferably with a spring, of the flexible conduit for connecting to the item of thermal control clothing (200), and a means for locking said flexible conduit in a variable unwound position.

11. Module (100) according to any one of the preceding claims, wherein the module also comprises a control unit (170) connected to said thermoelectric device (140) and to said pump (120), and configured at least to switch said module (100) on and off, and control an operating temperature or control a power consumption by the thermoelectric device (140), and wherein, preferentially,
the control unit (170) comprises a means for wireless communication with a remote control (500) of said module, said remote control (500) being configured at least to switch said module (100) on and off, and set a set-point temperature of the person's body or control a power consumption level by the thermoelectric device (140) and/or preferentially,
the control unit (170) is configured to
- detect a background noise of the electronic signal from the direct current source, wherein the direct current source is a battery external to said module, in particular a motorcycle battery (400);
and when no background noise is detected;
- switching the module (100) off.

12. System (10) for thermally controlling all or a portion of a person's, in particular a motorcyclist's, body, comprising a thermal control module (100) according to any one of claims 1 to 11, and an item of thermal control clothing (200), the inlet and outlet options of said module (100) being connected, directly or indirectly via a flexible conduit, respectively to an end of a conduit of the item of thermal control clothing (200).

13. System (10) according to claim 12, wherein the item of thermal control clothing (200) includes a double skin closed by stitching at the periphery of the item of clothing (200), and wherein the conduit of the thermal control clothing is bonded to the inner skin of the double skin, so as to be located inside the double skin.

14. System (10) according to claim 12, wherein the item of thermal control clothing (200) is also an item of safety clothing and includes an airbag, the conduit of the item of thermal control clothing being welded, preferably by high-frequency welding, on an inner face of said airbag.

15. Assembly comprising a motorcycle (600) and a system (10) for thermally controlling all or a portion of a person's, in particular a motorcyclist's, body according to one of claims 12 to 14, and wherein said module (100) is electrically connected to a motorcycle battery (400), and mechanically connected to a structural element (610) of the motorcycle, in particular to a bracket for mounting a "top-case" or saddlebag type luggage item for a motorcycle, via said plurality of anchor points (182), and preferentially furthermore comprising a "top-case" or saddlebag type luggage item (700) for a motorcycle mounted on said module (100) via said plurality of points (185) for mounting a "top-case" or saddlebag type luggage item for a motorcycle, such that said housing (180) is "sandwiched" between said structural element (610) of the motorcycle and said luggage item (700) for a motorcycle.
